Europäisches Patentamt

European Patent Office

Office européen des brevets

(11) Numéro de publication: **0 275 503 B1**

## FASCICULE DE BREVET EUROPEEN

(45) Date de publication de fascicule du brevet:
**25.09.91**

(21) Numéro de dépôt: **87118731.6**

(22) Date de dépôt: **17.12.87**

(51) Int. Cl.⁵: **F16F 9/46**, F16F 9/06,
B60G 17/08

(54) Amortisseur à compensation de charge.

(30) Priorité: **30.12.86 FR 8618371**

(43) Date de publication de la demande:
**27.07.88 Bulletin 88/30**

(45) Mention de la délivrance du brevet:
**25.09.91 Bulletin 91/39**

(84) Etats contractants désignés:
**DE ES FR GB IT**

(56) Documents cités:
EP-A- 0 185 389    DE-A- 3 526 156
FR-A- 1 593 989    FR-A- 2 287 627
FR-A- 2 327 450    FR-A- 2 566 338

INGENIEURS DE L'AUTOMOBILE, no. 3, avril
1984, pages 41-45,48, Paris, FR; J. SIRVEN:
"Amortisseurs à filtrage interne"

(73) Titulaire: **Sirven, Jacques**
**34, rue de l'Orangerie**
**F-78000 Versailles(FR)**

(72) Inventeur: **Sirven, Jacques**
**34, rue de l'Orangerie**
**F-78000 Versailles(FR)**

(74) Mandataire: **Casalonga, Axel et al**
**BUREAU D.A. CASALONGA - JOSSE Moras-**
**sistrasse 8**
**W-8000 München 5(DE)**

## Description

La présente invention a pour objet, un amortisseur pour suspension de véhicule automobile, comportant des moyens permettant de compenser la charge appliquée à la suspension du véhicule de façon à maintenir un fonctionnement optimal de l'amortisseur.

On a déjà décrit dans les demandes de brevets français FR-A-2287627 et FR-A-2415752, et dans la demande de brevet EP-A-185 389 des amortisseurs dans lesquels, la force d'amortissement décroît lorsque la vitesse du mouvement de compression dépasse une valeur limite prédéterminée. A cet effet, les amortisseurs décrits dans ces brevets, comportent une valve de commande capable, lors d'un mouvement de compression rapide dépassant une vitesse prédéterminée, d'ouvrir un passage de liquide hydraulique entre les deux chambres définies par un piston dans un cylindre. La valve de commande est soumise à la pression sensiblement constante d'un fluide, de préférence un gaz, contenu dans une chambre de référence dont une paroi est mobile avec la valve de commande. La valve de commande est de préférence montée directement dans le piston mobile, auquel cas l'amortisseur se présente sous la forme d'un amortisseur monotube. Dans un autre mode de réalisation décrit par example dans EP-A-185 389, la valve de commande est disposée dans un bloc fixe monté à l'intérieur d'un tube cylindrique supplémentaire qui entoure le cylindre, l'amortisseur se présentant alors sous la forme d'un amortisseur bitube. Un conduit fait communiquer la chambre de référence avec la partie supérieure du réservoir, contenant un gaz.

Dans un mode de réalisation préféré, l'amortisseur est monté par l'intermédiaire d'une pièce élastique déformable. Grâce à ce perfectionnement, lorsque l'accroissement par unité de temps de la vitesse de déplacement de la tige est très important, la pièce élastique est tout d'abord comprimée ce qui provoque un accroissement du volume des pièces immergées dans le cylindre entraînant ainsi le pilotage de la valve de commande avant que la force d'amortissement n'atteigne sa valeur maximale prédéterminée.

Ces amortisseurs, tels qu'ils ont été décrits, ne comportent pas de moyens permettant de tenir compte de la variation de la charge appliquée à la suspension du véhicule de sorte que le fonctionnement de ces amortisseurs peut s'en trouver perturbé.

On connaît par ailleurs des dispositifs de compensation de charge pour amortisseur de véhicule automobile dans lesquels on prévoit l'adjonction d'un volume de gaz extérieur à l'amortisseur à l'intérieur duquel peut se déplacer l'amortisseur dans son ensemble, le volume de gaz faisant ressort. Pour compenser la charge on peut alors déterminer par un capteur approprié l'élévation de la caisse du véhicule par rapport au sol et faire varier la pression du volume de gaz, par exemple au moyen d'une pompe et d'un système de décharge avec ou sans réservoir, la régulation étant conçue pour maintenir l'élévation de la caisse du véhicule constante par rapport au sol.

La demande de brevet allemand DE-A-3526156 (LOCHNER) décrit l'utilisation d'une telle chambre de compensation de la charge dans un amortisseur hydraulique du type monotube. Un clapet anti-retour monté sur le piston peut être durci lorsque la charge statique augmente par l'action de la pression d'un gaz. Un ressort pneumatique constitué par une chambre souple permet d'obtenir une compensation de la charge statique de façon à maintenir le piston sensiblement dans la portion médiane du corps de l'amortisseur. Une augmentation de la pression du gaz entraîne, dans cette structure, une modification des caractéristiques de fonctionnement de l'amortisseur.

La présente invention a pour objet un amortisseur qui, tout en conservant les caractéristiques de fonctionnement entraînant une diminution de la force d'amortissement au-delà d'une certaine vitesse de compression, permette de maintenir les caractéristiques de fonctionnement constantes quelle que soit la charge appliquée au véhicule. De cette manière, les caractéristiques de la suspension ne dépendent pas par exemple, du nombre de passagers ou de la masse des bagages transportés par le véhicule. De plus, une variation de la pression du gaz n'a pas d'effet sur les caractéristiques d'amortissement.

L'invention a également pour objet, une adaptation particulière des moyens de compensation de charge à un amortisseur du type précédemment mentionné, comportant une valve de commande soumise à l'action de la pression sensiblement constante d'un fluide contenu dans une chambre de référence de façon à permettre la diminution de la force d'amortissement lors d'un mouvement de compression rapide du piston de l'amortisseur.

L'invention a encore pour objet, une adaptation particulière d'un tel moyen de compensation de charge à un amortisseur du type précédemment mentionné, comportant un élément élastique capable d'entraîner une diminution du volume utile de l'amortisseur provoquant l'ouverture de la valve de commande lors d'un mouvement de compression brusque, les moyens de compensation de la charge du véhicule permettant d'équilibrer les efforts exercés sur cet élément élastique ou de modifier les caractéristiques de déformation de cet élément élastique pour agir sur le fonctionnement de l'amortisseur.

L'invention a également pour objet l'utilisation de tels amortisseurs avec compensation de charge pour une suspension de véhicule automobile dénuée de ressort, l'amortisseur assurant à lui seul l'intégralité de la suspension.

L'amortisseur pour suspension de véhicule automobile selon l'invention, comporte un cylindre contenant un liquide hydraulique, un piston actionné par une tige définissant dans le cylindre une première chambre et une deuxième chambre, ladite deuxième chambre contenant la tige et un réservoir de liquide hydraulique contenant un gaz dans sa partie supérieure. Le réservoir peut communiquer avec la première chambre par l'intermédiaire d'une restriction lors d'un mouvement de compression rapide. Une valve de commande est capable d'ouvrir un passage de liquide entre la première et la deuxième chambre, ladite valve de commande étant soumise d'une part à la pression du liquide hydraulique se trouvant dans la première chambre tendant à ouvrir la valve et d'autre part à l'action, tendant à fermer la valve, d'un ressort de rappel et de la pression d'un fluide contenu dans une chambre de référence dont une paroi est mobile avec la valve de commande. Un conduit fait communiquer la chambre de référence avec la partie supérieure du réservoir. Selon l'invention, l'amortisseur comprend en outre une enveloppe externe de compensation solidaire de la tige et enserrant l'amortisseur de façon étanche de façon à définir une chambre de compensation, la chambre de compensation étant en communication avec la chambre de référence, la partie haute du réservoir et avec une source de pression variable extérieure par un conduit.

Dans un mode de réalisation préféré, le fluide se trouvant dans la chambre de référence est un gaz et le réservoir de liquide hydraulique contient également un gaz éventuellement séparé du liquide par une membrane souple ou un piston mobile. L'enveloppe externe de compensation, le réservoir et la chambre de référence sont alors mis en communication.

. Dans une variante, l'enveloppe de compensation externe contient dans une première partie, un gaz dont la pression est variable sous l'action d'un moyen externe et dans une deuxième partie, du liquide hydraulique éventuellement séparé du gaz par une membrane souple ou un piston mobile. La deuxième partie de l'enveloppe de compensation se trouve en communication avec le réservoir du liquide hydraulique. La chambre de référence agissant sur la valve de commande peut être quant à elle en communication soit avec la première partie soit avec la deuxième partie de l'enveloppe externe de compensation. La chambre de référence peut donc contenir soit un gaz soit un liquide qui, toujours, définit par sa pression, la pression de référence agissant sur la valve de commande. Pour une charge déterminée, cette pression de référence est donc constante

Dans un mode de réalisation préféré de l'invention, l'amortisseur comprend en outre, un bloc élastique par l'intermédiaire duquel se fait la fixation du cylindre. Le bloc élastique est fixé à l'intérieur de l'amortisseur de façon à entraîner une diminution du volume utile de l'amortisseur provoquant l'ouverture de la valve de commande lors d'un mouvement de compression brusque. Dans ces conditions lors d'un tel mouvement de compression, la force d'amortissement diminue par le simple fait de l'ouverture de la valve de commande sous l'action de la déformation du bloc élastique. Dans ce mode de réalisation, la pression du gaz se trouvant dans l'enveloppe externe de compensation en communication avec le réservoir, agit également sur le bloc élastique de sorte que l'on obtient une compensation plus ou moins grande en fonction de la charge appliquée sur le véhicule, sans pour autant modifier dans les mêmes proportions l'effort exercé sur le bloc élastique d'attache de l'amortisseur. Par un choix approprié de la section du bloc élastique sur laquelle s'exerce la pression du liquide hydraulique, il est également possible d'adapter à la valeur désirée, l'effort exercé sur le bloc élastique par la pression du gaz se trouvant dans l'enveloppe de compensation communiquant avec le réservoir. C'est ainsi que la section du bloc élastique sur laquelle s'exerce la pression du liquide hydraulique contenu dans le réservoir peut être choisie égale, inférieure ou supérieure à la section utile de l'enveloppe de compensation. Par ce moyen, il devient possible de modifier le fonctionnement de l'ensemble de l'amortisseur, en faisant varier la courbe caractéristique du bloc élastique et ce de manière extrêmement simple puisqu'il suffit de mettre en communication l'enveloppe externe de compensation avec le réservoir et la chambre de référence.

Dans le cas d'une application de l'amortisseur selon l'invention à une suspension du type Mac Pherson, on peut envisager de monter le bloc élastique de façon excentrée par rapport à l'axe de la section utile de l'enveloppe de compensation de façon à créer un couple permettant de compenser le couple antagoniste dû au déport de la roue du véhicule par rapport à l'axe de la jambe de force.

L'étanchéité entre l'enveloppe externe de compensation et l'amortisseur peut être assurée par une bague d'étanchéité circulaire autorisant un déplacement relatif en translation de l'amortisseur par rapport à l'enveloppe de compensation externe.

Dans un mode de réalisation préféré, on utilise deux bagues d'étanchéité laissant entre elles un intervalle libre annulaire qui est alors rempli de liquide hydraulique et mis en communication avec l'enveloppe externe de compensation. De cette manière, la pression s'exerçant de chacun des côtés de la bague d'étanchéité séparant l'enveloppe de compensation et l'intervalle annulaire précité est parfaitement équilibrée ce qui améliore considérablement le fonctionnement de cette bague d'étanchéité.

L'enveloppe de compensation externe peut également dans une variante être constituée par un manchon souple non extensible dont une extrémité ouverte est fixée de manière étanche sur l'amortisseur et peut rculer sur celui-ci lors de la compensation de la charge.

L'invention sera mieux comprise à l'étude de quelques modes de réalisation pris à titre d'exemples nullement limitatifs et illustrés par les dessins annexés sur lesquels :

la figure 1 illustre un amortisseur selon l'invention du type monotube, la tige de l'amortisseur étant disposée vers le bas;

la figure 2 illustre une variante de l'amortisseur de la figure 1 dans laquelle le réservoir entoure la partie supérieure du cylindre;

la figure 3 illustre l'utilisation d'un amortisseur analogue à celui illustré sur la figure 1, à une suspension pour véhicule automobile du type Mac Pherson, comportant un ressort principal entourant l'amortisseur de façon excentrée;

la figure 4 est une variante de la figure 3 montrant une disposition excentrée du réservoir permettant d'obtenir un couple et de supprimer le ressort principal du mode de réalisation de la figure 3;

la figure 5 illustre une variante de l'amortisseur de la figure 1 dans laquelle le réservoir est complètement rempli de liquide;

la figure 6 illustre un autre mode de réalisation d'un amortisseur selon l'invention du type bitube, la tige de l'amortisseur étant dirigée vers le bas; et

la figure 7 illustre encore un autre mode de réalisation d'un amortisseur selon l'invention, montrant l'utilisation d'un manchon souple pour l'enveloppe de compensation et le montage d'un amortisseur avec la tige dirigée vers le haut dans une version d'amortisseur du type bitube.

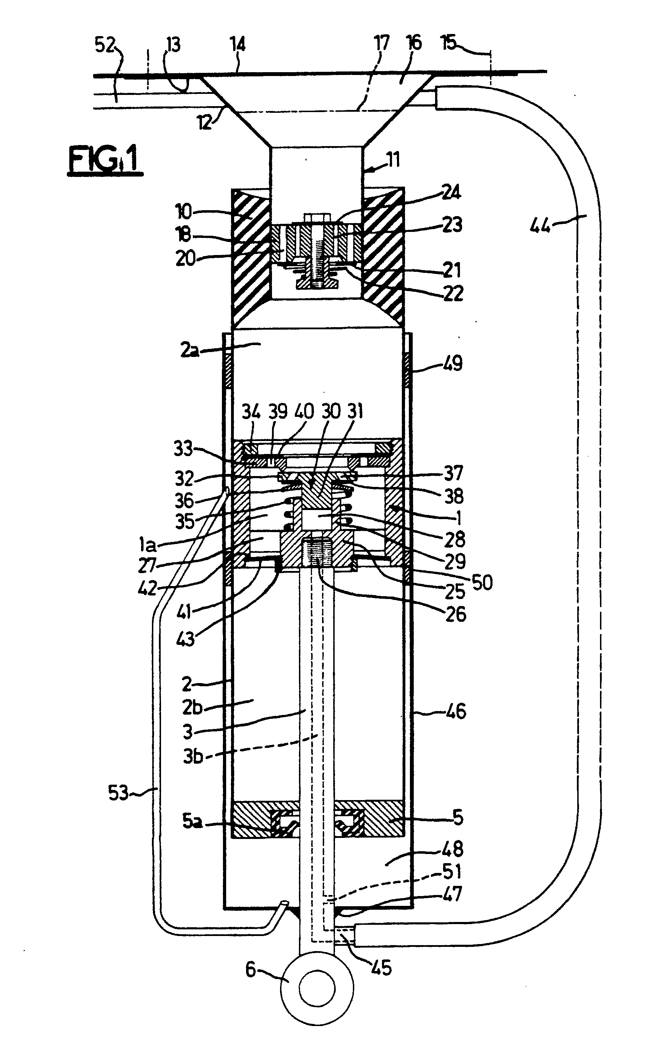

Tel qu'il est représenté sur la figure 1, l'amortisseur de l'invention, comprend un piston 1 coulissant à l'intérieur d'un cylindre 2 et définissant à l'intérieur de celui-ci une première chambre de 2a, côté fond du piston 1 et une deuxième chambre 2b qui renferme la tige 3 rendue solidaire du piston 1. Le cylindre 2 est solidaire à son extrémité inférieure d'une pièce de fermeture 5 comportant un alésage central muni d'une bague d'étanchéité 5a à travers laquelle coulisse la tige 3 du piston. Un anneau d'accrochage 6 placé à l'extrémité inférieure de la tige 3 permet la fixation rigide de la tige 3, par exemple à une roue ou un bras de suspension d'un véhicule non représenté. Un montage par rotule peut également être envisagé. L'amortisseur fonctionne avec la tige disposée vers le bas.

L'extrémité supérieure du cylindre 2 est fermée par un bloc élastique 10 en élastomère ou en un matériau analogue, solidaire de la paroi interne du cylindre 2 et qui présente un alésage central à ·l'intérieur duquel est fixé un réservoir de liquide hydraulique 11 dont la partie supérieure 12 s'évase et comporte une bride 13 permettant sa fixation rigide à la caisse 14 du véhicule automobile par des vis 15. Dans sa partie haute, le réservoir 11 renferme un gaz 16, le niveau du liquide étant représenté en 17. Le gaz 16 peut être en contact direct avec le liquide hydraulique comme illustré sur la figure 1 ou en être séparé par tout moyen approprié tel qu'une membrane souple ou un piston flottant.

Un élément de séparation 18 est fixé à l'intérieur du réservoir 11 et a pour but de séparer la première chambre 2a et le réservoir 11 proprement dit. L'élément de séparation 18 comporte des passages sensiblement axiaux 20 qui peuvent être obturés par une rondelle élastique 21 jouant le rôle de clapet anti-retour et sollicitée vers le haut par un ressort 2 de façon à permettre une circulation du liquide hydraulique depuis le réservoir 11 jusqu'à la première chambre 2a. L'élément de séparation 18 comporte par ailleurs des passages sensiblement axiaux 23 coopérant avec un clapet anti-retour 24 de rigidité déterminée pour permettre une circulation de liquide hydraulique dans la direction inverse.

Le clapet anti-retour 21 est choisi avec une souplesse adaptée pour n'opposer qu'une faible résistance au passage du liquide depuis le réservoir 11 vers la première chambre 2a. La rigidité du clapet anti-retour 24 est choisie plus importante de façon à assurer le fonctionnement de l'amortisseur lors d'un mouvement de compression de la tige 3 comme on le verra plus loin.

Le piston 1 est réaliseé sous la forme d'une pièce creuse présentant une âme centrale 25 munie d'un taraudage recevant l'extrémité filetée 26 de la tige 3 et solidaire des parois latérales du piston 1 par des nervures radiales 27 laissant entre elles un passage libre pour le liquide hydraulique. L'âme centrale 25 présente par ailleurs un logement jouant le rôle de chambre de référence 28, délimitée latéralement par un manchon annulaire 29 solidaire de l'âme 25 du piston 1. La chambre de référence 28 est remplie d'un fluide qui est, dans le mode de réalisation illustré sur la figure 1, un gaz à une pression sensiblement constante pour une chargé déterminée. La chambre de référence 28 est délimitée à sa partie supérieure de façon mobile par la surface inférieure de la valve de commande 30 qui se présente sous la forme d'un piston auxiliaire 31 pouvant coulisser de manière étanche à l'intérieur du logement 28. La valve de commande 30 présente également un plateau supérieur 32 de plus grand diamètre, venant par sa face supérieur en contact d'étanchéité avec un siège solidaire d'une rondelle 33 fixée aux parois latérales du piston 1 par une bague de serrage 34.

La valve de commande 30 est sollicitée en direction de sa fermeture contre le siège de la rondelle 33 par l'action d'un ressort 35 qui prend appui sur un rebord de l'âme centrale 25 du piston 1 d'une part et, sur une coupelle annulaire 36 entourant la partie inférieure 31 de la valve de . commande 30 d'autre part. Le plateau 32 de la valve de commande 30 présente des perforations 37 inclinées par rapport à l'axe du dispositif et coopérant avec un clapet anti-retour 38 maintenu contre la surface inférieure du plateau 32 par la coupelle 36 et le ressort 35 de façon à autoriser un passage limité de liquide entre la première chambre 2a et la deuxième chambre 2b. La rondelle 33 comporte également des perçages 39 coopérant avec un clapet anti-retour 40 maintenu par serrage entre la rondelle 33 et la bague de serrage 34 de façon à autoriser un passage limité de liquide depuis la deuxième chambre 2b vers la première chambre 2a.

Dans le mode de réalisation illustré, un clapet 41 créant une restriction supplémentaire est monté au voisinage de l'extrémité frontale du piston 1 opposée à la valve de commande 30. Le clapet 41 est constitué par une pièce annulaire mince, flexible et est simplement appuyé par sa périphérie extérieure sur un rebord 42 pratiqué sur la paroi latérale du piston 1 de façon à permettre un passage restreint du liquide provenant de la première chambre 2a depuis l'espace interne 10 du piston 1 en direction de la deuxième chambre 2b. La périphérie interne du clapet 41 vient s'appuyer sur le rebord que constitue l'écrou 43 vissé sur l'âme centrale 25 du piston 1.

Il en résulte une possibilité de passage restreint du liquide depuis la deuxième chambre 2b vers l'espace interne 1a. Le clapet 41 peut fonctionner dans les deux sens en s'ouvrant alternativement au voisinage de sa périphérie extérieure ou au voisinage de sa périphérie interne.

La chambre de référence 28 est mise en communication avec la partie supérieure 16 du réservoir 11 par une canalisation souple 44 reliée par l'orifice 45 à l'extrémité inférieure de la tige 3 qui présente un perçage axial 3b pratiqué sur toute la longueur de la tige 3 et débouchant dans la chambre de référence 28.

Un tube cylindrique supplémentaire 46 constitue une enveloppe externe de compensation et est fixé de manière rigide à l'extrémité inférieure de la tige 3 par exemple par soudage en 47. La partie inférieure de l'enveloppe de compensation 46 définit une chambre de compensation 48 à l'intérieur de laquelle peut se déplacer le cylindre 2. L'étanchéité du mouvement de coulissment du cylindre 2 par rapport à l'enveloppe de compensation 46 est assurée par deux bagues d'étanchéité 49 et 50 qui peuvent être montées fixes dans l'enveloppe externe de compensation 46 ou au contraire être montées sur la périphérie extérieure du cylindre 2, auquel cas la paroi interne de l'enveloppe de compensation 46 est usinée de manière correspondante. On peut également monter la bague 49 fixe sur le tube 46 tandis que la bague 50 est fixée à l'intérieur du cylindre 2. Bien entendu, d'autres modes de réalisation peuvent être envisagés pour assurer l'étanchéité, par exemple une seule bague d'étanchéité.

Un orifice 51 met en communication le perçage axial 3b avec la chambre de compensation 48. Par ailleurs un conduit 52 débouche dans la zone supérieure 16 du réservoir 11 et est relié à une source de pression variable extérieure non représenté sur la figure.

Il apparaît de cette manière le gaz se trouvant dans la partie supérieur 16 du réservoir 11, dans la chambre de compensation 48 et dans la chambre de référence 28 est à la même pression. En effet toutes ces portions de l'amortisseur communiquent entre elles par l'intermédiaire du conduit 44, du perçage axial 3b et de l'orifice 51.

La variation de la pression de ce gaz peut être commandée par un dispositif de compensation de charge du véhicule comportant par exemple un capteur d'élévation de la caisse par rapport au sol et une installation de pompage.

L'étanchéité entre l'enveloppe externe de compensation 46 et le cylindre 2 peut encore être améliorée dans le mode de réalisation illustré sur la figure 1, par le fait que l'espace annulaire défini entre les deux bagues d'étanchéité 49 et 50 est remplie de liquide hydraulique et communique par le conduit 53 avec la zone inférieure de la chambre de compensation 48. Dans ces conditions il apparaît un équilibre de pression entre les face supérieure et inférieure de la bague d'étanchéité 50 de sorte que celle-ci voit son efficacité d'étanchéité largement améliorée. De plus l'étanchéité de la bague supérieure 49 est également améliorée par le fait que la face soumise à la pression la plus importante est baignée de liquide.

Lors du fonctionnement de l'amortisseur illustré sur la figure 1, la valve de commande 30 est soumise à l'action de quatre forces différentes :

- la force du ressort 35 qui tend à fermer la valve 30;
- la pression régnant dans la chambre 2a qui agit sur la surface du plateau 32 de la valve de commande 30 dans un sens qui tend à ouvrir ladite valve de commande;

- la pression sensiblement constante du gaz se trouvant dans la chambre de référence 28 qui agit sur la surface du piston auxiliaire 31 et qui tend à fermer la valve de commande 30;
- et enfin la pression du liquide agissant sur la surface restants inférieure du plateau 32 tendant à fermer la valve de commande 30.

Pour de faibles vitesses de compression de la tige 3, le liquide hydraulique peut passer de la chambre 2a à la chambre 2b en traversant les perçages 37, le clapet anti-retour 38 ainsi que le clapet supplémentaire 41 qui s'ouvre au voisinage de sa périphérie extérieure. Lorsque la vitesse de compression de la tige dépasse une valeur limite prédéterminée qui correspond également à une valeur limite de la pression régnant dans la première chambre 2a, la valve 30 s'ouvre, laissant un passage beaucoup plus important pour le liquide provenant de la première chambre 2a. Le liquide doit encore traverser la restriction constituée par le clapet supplémentaire 41 de sorte que la force d'amortissement ne décroît pas jusqu'à une valeur nulle mais reste maintenue à une valeur qui dépend de la rigidité du clapet 41 et qui peut être choisie de façon à maintenir par exemple la valeur minimale de la force d'amortissement au tiers ou au quart d'environ de la valeur maximale de la force d'amortissement avant ouverture de la valve de commande 30. Bien entendu ce résultat peut, dans certains cas, être considéré comme inutile. Il suffit alors de supprimer le clapet supplémentaire 41.

On notera que le volume de liquide supplémentaire correspondant à l'immersion de la tige 3 dans le cylindre 2 s'échappe vers le réservoir 11 par les passages 23 et par l'intermédiaire des restrictions définies par le clapet anti-retour 24. La rigidité du clapet 24 est donc un élément important dans la définition des caractéristiques de l'amortisseur. C'est en effet de la rigidité de ce clapet 24 que dépend la pression de pilotage de la valve de commande 30 et donc la valeur de la vitesse d'enfoncement de la tige au moment de l'ouverture de la valve de commande. Plus le clapet 24 est rigide, plus la valve s'ouvre pour une vitesse de compression faible de la tige 3.

Lors d'un mouvement inverse de la tige 3 correspondant à une détente, le liquide hydraulique passe de la deuxième chambre 2b dans le première chambre 2a par la pérphérie interne du clapet supplémentaire 41 et les passages 39 définissant des restrictions en combinaison avec le clapet anti-retour 40. Dans le même temps, une certain portion de liquide se trouvant dans le réservoir 11 traverse les passages 20 et les restrictions constituées par le clapet anti-retour 21. Il est avantageux de prévoir un clapet anti-retour 21 présentant une relativement grande souplesse de façon à obtenir les meilleures caractéristiques en fonctionnement de détente.

Lors d'une compression brusque de l'amortisseur, le bloc élastomère 10 se déforme tout d'abord et entraîne une diminution du volume utile de la première chambre 2a avant toute déplacement de compression de la tige 3, ce qui entraîne une augmentation de la pression régnant dans la chambre 2a et donc une action immédiate sur la valve de commande 30.

Lorsque la charge appliquée sur le véhicule varie c'est-à-dire que l'écartement entre la caisse du véhicule 14 et l'anneau d'accrochage 6 varie, il convient de pouvoir maintenir les caractéristiques de fonctionnement de l'amortisseur essentiellement constantes. C'est le but du dispositif de compensation de la charge qui agit par l'intermédiaire du conduit 52. C'est ainsi par exemple que lors d'une augmenation de la charge appliqué au véhicule, on augmente la pression du gaz véhiculé par le conduit 52. Il en résulte une augmentation de la pression du gaz se trouvant dans l'amortisseur c'est-à-dire à la fois dans la partie supérieure 16 du réservoir 11, dans la chambre de compensation 48 et dans la chambre de référence 28. L'augmentation de la pression dans la chambre de compensation 48 entraîne un effet de ressort pneumatique sur le cylindre 2 qui se maintient donc sensiblement dans la position de repos illustrée sur la figure 1 quelle que soit la charge appliquée au véhicule.

Par ailleurs le fait de soumettre également le réservoir 11 à la même augmentation de pression présente l'avantage d'exercer un effet de compensation également sur le bloc élastique 10 ce qui permet, selon la structure et le montage de ce bloc, d'obtenir un équilibre des efforts appliqués sur le bloc élastique 10 ou une différence déterminée de ces efforts en vue d'obtenir une modification particulière des caractéristiques de déformation du bloc élastique. On comprendra qu'une variation des caractéristiques de déformation du bloc élastique 10 entraîne automatiquement une variation correspondante du fonctionnement de l'amortisseur puisque la déformation du bloc élastique 10 entraîne une variation du volume utile de la première chambre 2a et une action correspondante sur le pilotage de la valve de commande 30 commandant elle-même la valeur de la force d'amortissement. Dans ces conditions, il apparaît que l'invention permet donc, par cette adaptation particulière des moyens de compensation de la charge du véhicule, d'agir sur le fonctionnement même de l'amortisseur.

Dans le mode de réalisation illustré sur la figure 1, la section utile de la chambre de compensation 48 est quelque peu supérieure à la section du bloc élastique 10 soumise à la pression du liquide hydraulique se trouvant dans la première chambre 2a.

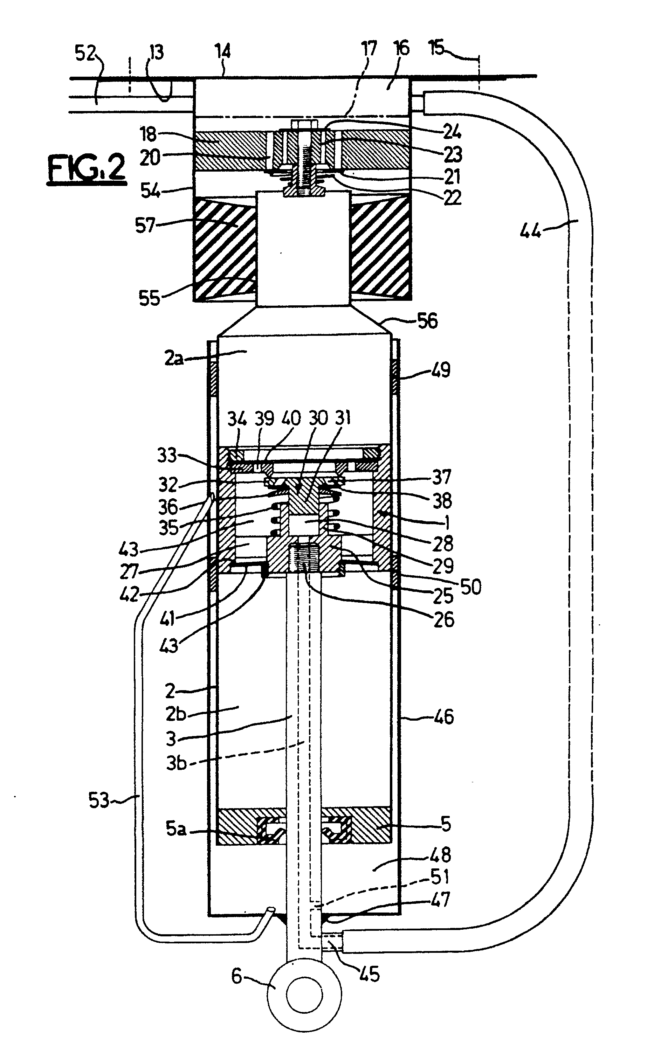

Dans le mode de réalisation illustré sur la figure 2 qui est identique à celui de la figure 1 à part la disposition du réservoir 11, on a fait en sorte au contraire que la section utile de la chambre de compensation 48 soit sensiblement égale à la section du bloc élastique 10 sur laquelle s'exerce la pression du liquide se trouvant dans le réservoir 11.

Dans le mode de réalisation de la figure 2, le réservoir fixé à la caisse 14 du véhicule présente un manchon 54 venant entourer l'extrémité supérieure 55 du cylindre 2 et à l'intérieur duquel est fixé l'élément de séparation 18 jouant le même rôle que dans le mode de réalisation de la figure 1. L'extrémité supérieure 55 présente un diamètre réduit et se raccorde au cylindre 2 par une portion tronconique 56. Le bloc élastique 57 est fixé entre la portion supérieure 55 et la surface interne du manchon 54. Il en résulte comme précédemment une modification du volume utile de l'amortisseur qui agit sur le pilotage de la valve de commande 30.

On comprendra qu'il serait également possible de modifier le mode de réalisation de la figure 1 en prévoyant une portion extrême supérieure évasée pour le cylindre 2 sans modifier la structure du réservoir 11. Dans ce cas, le bloc élastique 10 serait donc d'un diamètre extérieur plus important et la surface utile de la chambre de compensation 48 serait inférieure à la surface du bloc élastique 10 soumise à l'action de la pression du liquide dans le première chambre 2a.

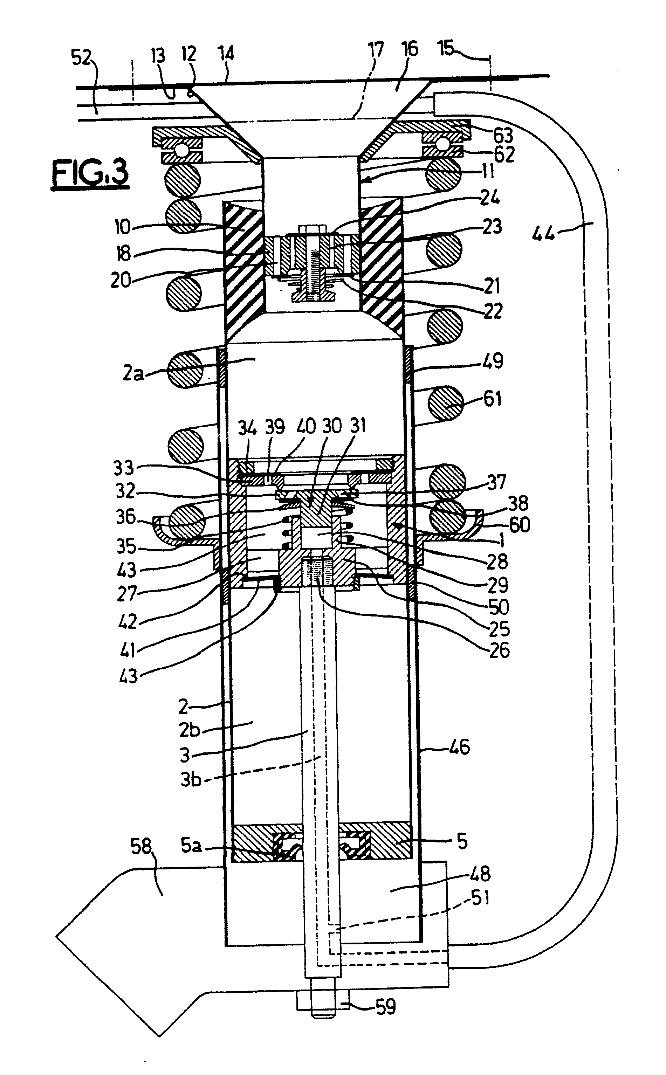

L'amortisseur de la présente invention peut être aisément adapté à une suspension de véhicule automobile dans laquelle l'amortisseur est placé à l'intérieur du ressort principal de la suspension. La figure 3 illustre un mode de réalisation de l'amortisseur selon l'invention adapté à une telle suspension dite Mac Pherson, l'amortisseur étant du type monotube avec la tige dirigée vers le bas comme dans le mode de réalisation des figures 1 et 2. Les pièces identiques portent les mêmes références que sur les figures précédentes.

L'enveloppe externe de compensation 46 est fixée dans sa partie basse à un élément 58 solidaire de la fusée avant ou arrière du véhicule, non représentée sur la figure. De la même manière, la tige 3 de l'amortisseur est fixée dans sa partie basse au moyen d'en écrou 59 à l'élément 58. Une collerette d'appui 60 est fixée, par exemple par soudure, à la périphérie extérieure de l'enveloppe externe de compensation 46 au voisinage de sa partie médiane. Le ressort principal 61 de la suspension vient s'appuyer dans sa partie basse sur la collerette 60 et coopère par ailleurs dans sa partie haute avec une butée à billes 62 qui s'appuie sur une collerette d'appui 63 solidaire du réservoir 11. Le ressort 61 peut être monté comme illustré sur la figure 3 avec son axe confondu avec l'axe de l'amortisseur. Dans certains cas, il est au contraire préféré de monter le ressort 61 de façon également décalée afin de créer un couple rattrapant le déport de la roue du véhicule par rapport à l'axe de la jambe de force.

Dans le mode de réalisation illustré dans la figure 3, la compensation de la charge se fait de la même manière que dans les modes de réalisation illustrés sur les figures 1 et 2. On retrouve également la mise en communication de la chambre de référence 28, de la chambre de compensation 48 et de la partie supérieure 16 du réservoir 11 par la conduite 44. Dans ce mode de réalisation, l'espace annulaire entre les bagues d'étanchéité 49 et 50 n'est pas rempli de liquide, afin d'illustrer une telle variante. On comprendra bien entendu qu'il pourrait être possible de prévoir du liquide dans dans cet intervalle annulaire pour améliorer l'étanchéité comme cela a déjà été décrit en référence aux figures précédentes. On pourrait également monter différemment les bagues de guidage 49 et 50. La bague 49 pourrait être solidaire de l'enveloppe externe 46 et la bague 50 solidaire intérieurement du cylindre 2 et montée dans la partie inférieure du cylindre 2, l'enveloppe 46 étant usinée intérieurement et le cylindre 2 usiné extérieurement. On obtiendrait de la sorte un très bon guidage de la jambe de force et une meilleure tenue au couple de basculement créé par la zone.

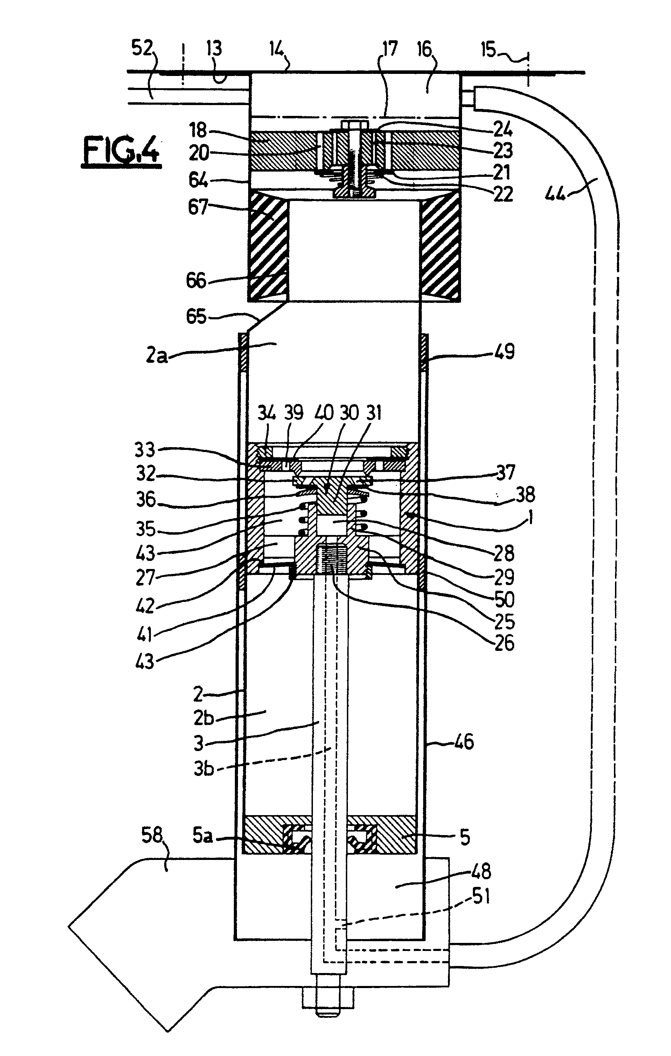

La figure 4 illustre une variante de suspension du type Mac Pherson dans laquelle le ressort principal de la suspension utilisé dans le mode de réalisation de la figure 3 a été complètement supprimé et est remplacé par le ressort pneumatique constitué par la chambre de compression 48 elle-même. Par ailleurs dans ce mode de réalisation, on a prévu de décaler l'axe du réservoir, constitué par un manchon cylindrique 64, par rapport à l'axe de l'amortisseur. A cet effet, la partie supérieure du cylindre 2 présente un décrochement de profil partiellement conique 65 et une partie extrême de diamètre réduit 66. L'élément de séparation 18 de structure identique à celle de l'élément de séparation des modes de séparation précédents et jouant le même rôle est fixé, comme dans le mode de réalisation de la figure 2 à l'intérieur du manchon 64 fixé rigidement à la caisse du véhicule. Comme c'était le cas dans le mode de réalisation illustré sur la figure 2, le bloc élastique 67 est ici monté entre la partie extrême 66 du cylindre 2 et le réservoir 64 de sortie que la déformation du bloc élastique 67 provoque une variation du volume utile du réservoir 64 entraînant comme il a été dit précédemment, le pilotage de la valve de commande 30 en cas de mouvement de compression brusque.

Dans ce mode de réalisation, la suspension est essentiellement pneumatique et la mise sous pression de l'amortisseur par la conduite 52 permet à la fois d'effectuer la compensation de la charge et d'assurer la suspension du véhicule. Le montage désaxé du réservoir 64 et du bloc élastique 67 permet d'obtenir un couple pour la suspension si cela est désiré dans une telle suspension de type Mac Pherson. On pourrait bien entendu envisager de monter au contraire le réservoir dans l'axe de l'amortisseur. Comme dans le cas des modes de réalisation précédents, la chambre de référence 28 est en communication avec la chambre de compensation 48 par l'orifice 51 et avec la partie supérieure 16 du réservoir 64 par la conduite 44.

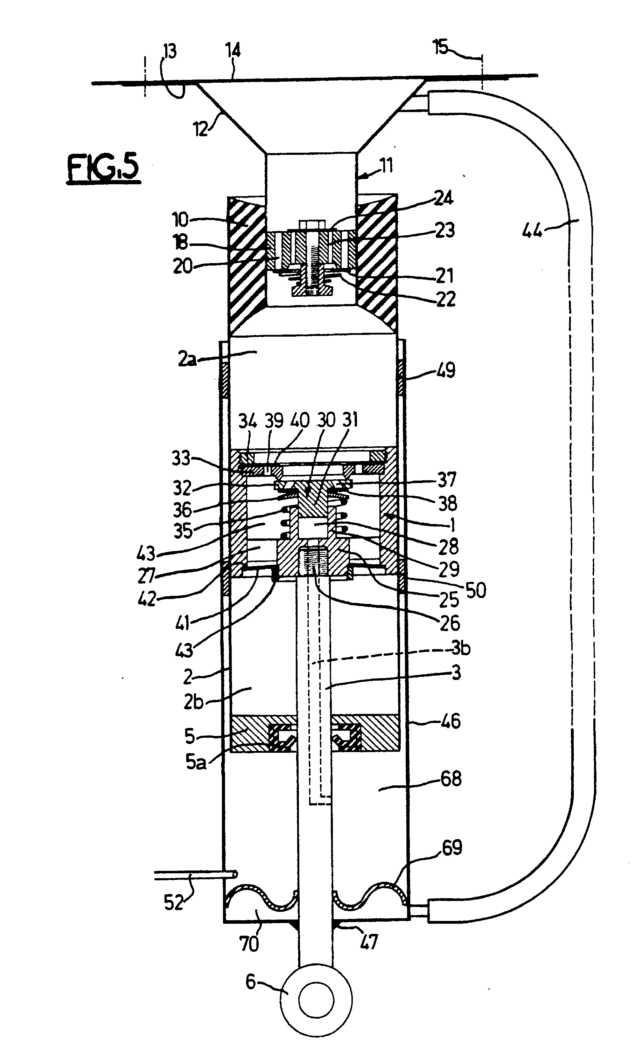

Dans le mode de réalisation décrit sur la figure 5 où les pièces identiques portent les mêmes références, le réservoir 11 est intégralement rempli de liquide hydraulique. La partie inférieure de l'enveloppe externe de compensation 46 comprend une première partie 68 qui est en communication avec une source extérieure de gaz sous pression par l'intermédiaire de la conduite 52 qui débouche cette fois dans la première partie 68 de l'enveloppe externe 46 et non plus dans le réservoir 11 comme c'était le cas dans les modes de réalisation précédents. La première partie 68 est donc remplie d'un gaz à une pression variable et joue le rôle de chambre de compensation de la charge. Le perçage axial 3b de la tige 3 débouche directement dans la première partie 68 de l'enveloppe externe de compensation 46. De cette manière la chambre de référence 28 est en communication avec la première partie 68 et à la même pression que cette dernière. L'extrémité inférieure de l'enveloppe externe de compensation 46 présente une membrane souple 69 qui sépare la première partie 68 remplie de gaz d'une deuxième partie 70 remplie de liquide hydraulique et communiquant par la conduite 44 avec le réservoir 11.

A part cette différence de structure, l'amortisseur de ce mode de réalisation fonctionne de la même façon que précédemment. En effet la chambre de référence 28 contient un gaz à une pression sensiblement constante pour une charge déterminée et qui est celle de la chambre de compensation constituée par la première partie 68 de l'enveloppe externe 46. Cette pression est variable selon la charge du véhicule grâce à la présence de la conduite 52 reliée au système de mise sous pression des moyens de compensation de la charge. Dans ce mode de réalisation, le réservoir de liquide hydraulique est constitué à la fois par le réservoir 11 placé à la partie supérieure de l'amortisseur et par la deuxième partie 70 située à l'extrémité inférieure de l'enveloppe externe de compensation 46.

Bien qu'une membrane souple 69 ait été prévue pour séparer physiquement le liquide hydraulique se trouvant dans l'enveloppe externe 46 du gaz s'y trouvant également, on pourrait envisager de supprimer cette membrane ou de la remplacer par une autre séparation telle qu'un piston mobile dans la mesure où la conduite 52 et le perçage axial 3b débouchent toujours dans la première partie 68 remplie de gaz.

Dans une variante, il serait possible de faire déboucher le perçage axial 3b dans la deuxième partie 70 de l'enveloppe externe 46. Dans ce cas la chambre de référence 28 serait donc remplie de liquide ce qui ne modifierait pas le principe de fonctionnement de l'amortisseur. Si l'on souhaite en outre dans ce cas, améliorer l'étanchéité entre l'enveloppe externe de compensation 46 et le cylindre 2, on pourra relier l'espace annulaire situé entre les deux bagues 49 et 50 à la deuxième partie 70 de l'enveloppe externe 46. Cet espace annulaire est alors rempli de liquide hydraulique.

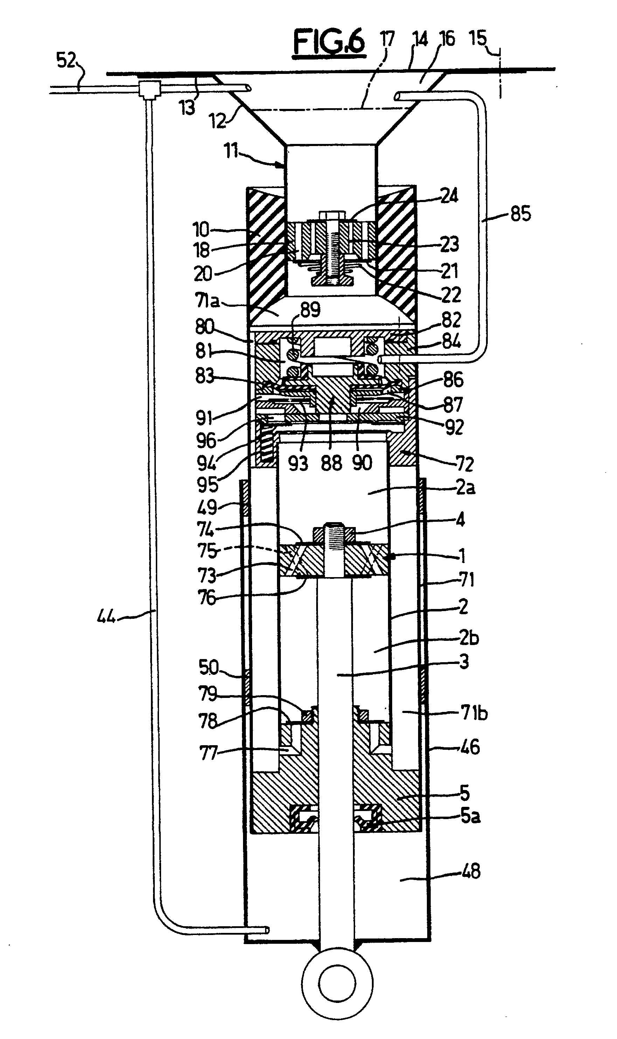

La figure 6 illustre un mode de réalisation de l'invention dans un amortisseur du type bitube, la tige étant dirigée vers le bas. Dans ce mode de réalisation où les pièces identiques portent les mêmes références, le cylindre 2 est monté à l'intérieur d'un tube cylindrique supplémentaire 71 servant de logement à l'ensemble des éléments de l'amortisseur et solidaire de la pièce de fermeture inférieure 5. L'enveloppe externe de compensation 46 est montée de façon à entourer le tube cylindrique 71, l'étanchéité étant assurée comme précédemment par deux bagues 49 et 50. L'extrémité supérieure du cylindre 2 est solidaire d'une pièce de fermeture supérieure 72 qui est également fixée au tube cylindrique 71. Le bloc élastomère 10 est fixé à l'intérieur du tube cylindrique 71 au-dessus de la pièce de fermeture 72. Le réservoir 11 est monté de la même manière que dans les modes de réalisation précédents dans l'alésage du bloc élastique 10 à la partie supérieure de l'ensemble. L'élément de séparation 18 identique à celui illustré dans le mode de réalisation de la figure 1, sépare la portion supérieure 71a du tube cylindrique 71 et le réservoir 11 proprement dit.

Dans ce mode de réalisation, le piston 1 est de structure massive et comprend des passages 73 coopérant avec un clapet anti-retour 74 de façon à permettre un passage limité de liquide hydraulique depuis la deuxième chambre 2b jusqu'à la première chambre 2a et interdire toute circulation en sens inverse. Le piston 1 comporte également des passages 75 coopérant avec un clapet anti-retour 76 pour permettre une circulation limitée de liquide hydraulique depuis la première chambre 2a jusqu'à la deuxième chambre 2b et interdire toute circulation en sens inverse. Des passages 77 et un clapet anti-retour 78 très souple maintenu par un écrou 79 sont prévus dans la pièce inférieure 5 pour permettre la circulation du liquide hydraulique depuis la chambre annulaire 71b définie entre le tube 71 et le cylindre 2 vers la deuxième chambre 2b et l'interdire dans l'autre sens.

La pièce de fermeture supérieure 72 est constituée par l'empilement d'un certain nombre de pièces, l'ensemble étant maintenu par des vis de serrage. Toutes ces pièces présentent en plan un profil identique, des passages axiaux 80 étant prévus à la périphérie de la pièce 72 afin de permettre la circulation du liquide hydraulique entre la chambre annulaire 71b et la partie supérieure 71a du tube cylindrique 71.

Une chambre de référence 81 jouant le même rôle que la chambre de référence 28 des modes de réalisation précédents est totalement fermée et définie à l'intérieur de la pièce de fermeture 72 entre un couvercle supérieur 82 et une membrane souple 83, les parois latérales de la chambre 81 étant définies par une pièce annulaire 84. A l'intérieur de la chambre de référence 81 se trouve un gaz à une pression qui reste sensiblement constante pendant le fonctionnement de l'amortisseur et est de préférence supérieure à la pression atmosphérique. Un conduit 85 extérieur à l'amortisseur, met en communication la chambre de référence 81 avec la portion supérieure 16 du réservoir 11 de façon à équilibrer les pressions.

La membrane souple 83 est montée serrée par sa périphérique extérieure entre la pièce annulaire 84 et un disque déflecteur 86 fixe muni de perforations 87 au voisinage de sa périphérie extérieure. Une valve de commande 88 est montée à l'intérieur de la chambre de référence 81. La valve de commande 88 comporte une portion cylindrique analogue à un piston qui peut coulisser à l'intérieur d'un manchon cylindrique de guidage qui fait partie intégrante du disque déflecteur 86. Un ressort de rappel 89 est également monté à l'intérieur de la chambre de référence 81 et vient s'appuyer d'une part sur la paroi interne du couvercle 82 et d'autre part sur la valve 88 avec interposition d'un repli de la membrane souple 83. La valve 88 guidée par l'organe déflecteur fixe 86 peut se déplacer axialement à l'intérieur de la chambre de référence 81 dont une paroi est mobile puisqu'elle est constituée en partie par la membrane souple 83 et par la valve 88. La pression du gaz se trouvant dans la chambre de référence 81 ainsi que le ressort de compression 89 agissent sur la valve 88 dans le sens de sa fermeture. Un espace intermédiaire 90 est ménagé à l'intérieur de la pièce de fermeture 72 et se trouve délimité par la membrane souple 83 qui constitue une paroi mobile supérieure de l'espace 90. Cet espace intermédiaire est en communication par les passages radiaux 91 avec les passages 80 c'est-à-dire d'une part avec la portion supérieure 71a et d'autre part avec la chambre annulaire 71b du tube cylindrique 71. L'espace intermédiaire 90 est en outre délimité par une pièce annulaire 92 qui présente un orifice central jouant le rôle de siège pour la valve de commande 88. Un clapet supplémentaire 93 sépare l'espace intermédiaire 90 en deux parties et joue le même rôle que le clapet supplémentaire 41 du mode de réalisation de la figure 1. Comme précédemment on pourrait également, dans une variante, supprimer le clapet supplémentaire 93. Un clapet de détente 94 soumis à l'action d'une pluralité de ressorts axiaux 95 coopère avec des passages 96 pour permettre le passage du liquide hydraulique depuis la portion supérieure 71a ou la chambre annulaire 71b jusque dans la première chambre 2a du cylindre lors d'un mouvement de détente.

La chambre de compensation 48 placée à la partie basse de l'enveloppe externe 46 est en communication comme dans les modes de réalisation précédents par la conduite 44 avec la partie supérieure 16 du réservoir 11. La mise sous pression de l'ensemble de l'amortisseur se fait par la conduite 52 reliée comme précédemment à une installation de mise sous pression de gaz et qui débouche dans la partie supérieure 16 du réservoir 11.

Dans ce mode de réalisation, il apparaît donc que la chambre de référence 81 est à la même pression que la partie supérieure 16 du réservoir 11 grâce à l'existence de la conduite 85. Cette pression est également la même que celle qui règne dans la chambre de compensation 48 grâce à la conduite 44.

Lors d'un mouvement de compression rapide des l'amortisseur, la pression du liquide hydraulique augmente dans l'espace intermédiaire 90 jusqu'à agir sur la membrane souple 83 provoquant l'ouverture de la valve 88. La valeur maximale de la force de l'amortissement dépend de la précontrainte du ressort 89. Lors d'une compression brusque, le bloc élastique 10 se comprime avant même tout mouvement de la tige 3. Il en résulte une diminution du volume utile du tube cylindrique 71 qui provoque une augmentation de la pression dans la chambre intermédiaire 90 et l'ouverture de la valve de commande 88. L'existence du clapet 93 formant une restriction laminant l'écoulement du liquide issu de la première chambre 2a, permet de faire en sorte que la force d'amortissement ne décroisse pas jusqu'à une valeur pratiquement nulle lorsque s'ouvre la valve 88. On notera que la composante statique de la pression du liquide régnant dans l'espace intermédiaire 90 est appliquée intégralement sur la membrane souple 83 en raison de l'existence des perforations 87 du déflecteur 86. Le déflecteur 86 canalise par ailleurs l'écoulement du liquide et permet ainsi d'empêcher que le fonctionnement de la valve de commande 88 ne soit perturbé par des tourbillons entraînant des variations locales de pression.

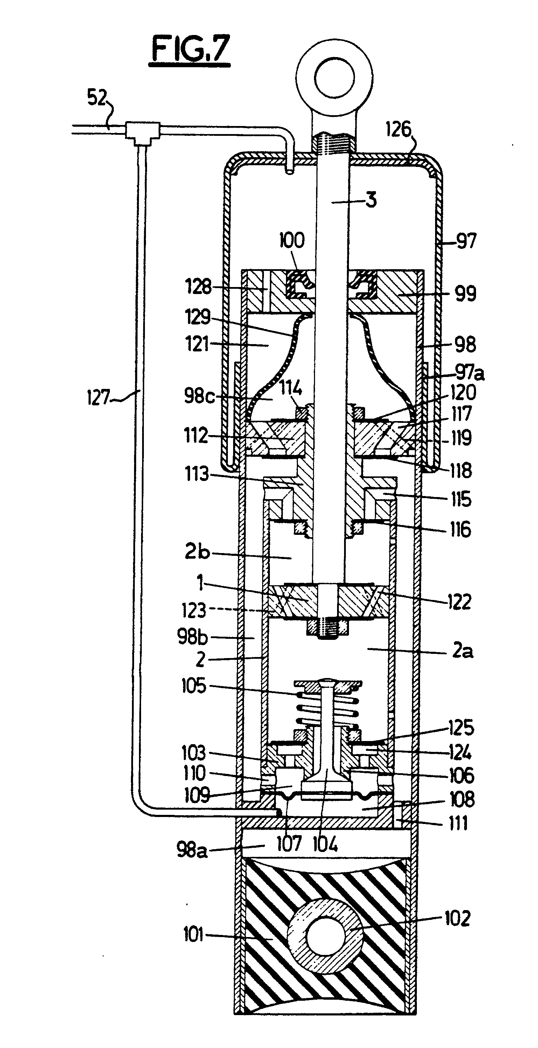

Le mode de réalisation illustré sur la figure 7 est relatif à un amortisseur selon l'invention dans une version bitube, la tige étant toutefois dirigée vers le haut. Par ailleurs dans ce mode de réalisation, l'enveloppe externe de compensation rigide des modes de réalisation précédents est remplacée par un manchon 97 réalisé en une matière souple non extensible.

Les pièces identiques aux modes de réalisation précédents comportent les mêmes références.

Dans ce mode de réalisation, le cylindrique 2 est logé à l'intérieur d'un tube cylindrique 98 comportant à son extrémité supérieure un capuchon de fermeture 99 muni d'une bague d'étanchéité 100 permettant le passage et le coulissement étanche de la tige 3 du piston 1. La partie basse du tube cylindrique 98 est occupée par un bloc élastique en élastomère 101 solidaire de la paroi interne du tube 98 et supportant un dispositif d'accrochage 102 de l'amortisseur. Le bloc élastique 101 joue le même rôle que le bloc élastique 10 des modes de réalisation précédents.

L'extrémité inférieure du cylindre 2 est obturée par une pièce de fermeture inférieure 103 munie d'une valve de commande 104 qui est fermée par l'action d'un ressort de rappel 105 qui l'appuie sur le siège 106. Une membrane souple 107 est fixée sur la valve de commande 104 et est montée à l'intérieur de la pièce de fermeture 103 de façon à définir une chambre de référence fermée 108 dont la membrane souple 107 constitue une paroi mobile. Un espace intermédiaire 109 communique par les passages 110 avec un espace annulaire 98b situé entre le cylindre 2 et le tube cylindrique 98. Des passages 111 permettant la communication entre l'espace annulaire 98b et une zone 98a remplie de liquide et délimitée par la face supérieure du bloc élastique 101 qui joue un rôle d'étanchéité pour l'extrémité inférieure du tube 98.

L'espace annulaire 98b est limité à sa partie supérieure par une cloison de séparation 112 reliée à une pièce de fermeture supérieure 113 qui obture l'extrémité supérieure du cylindre 2 et qui comporte un alésage central à travers lequel coulisse la tige 3. Un écrou 114 permet la fixation de la cloison de séparation 112 sur la pièce de fermeture supérieure 113. Cette dernière comporte des passages 115 coopérant avec un clapet anti-retour 116 très souple qui joue un rôle analogue au clapet 21 du mode de réalisation de la figure 1 et permet le passage du liquide hydraulique depuis l'espace annulaire 98b vers la deuxième chambre 2b du cylindrique 2.

De la même manière, la cloison de séparation 112 comporte des passages 117 coopérant avec un clapet anti-retour 118 très souple ainsi que des passages 119 coopérant avec un clapet anti-retour plus rigide 120 permettant respectivement une circulation dans un sens uniquement entre l'espace annulaire 98b et le réservoir de fluide hydraulique 98c situé à la partie supérieure du tube 98, lequel comprend en partie du liquide et en partie du gaz 121 séparés par une membrane souple 129.

L'amortisseur se complète par des passages 122 et 123 coopérant avec des clapets anti-retour disposés dans le piston 1 lui-même de structure massive. Enfin des passages 124 coopérant avec un clapet anti-retour 125 permettent un passage supplémentaire de liquide depuis l'espace intermédiaire 109 vers la première chambre 2a à l'intérieur de la pièce 103.

Le manchon 97 comporte une extrémité ouverte 97a fixée de matière étanche autour du tube 98 dans sa partie supérieure et peut rouler sur celui-ci lors du mouvement de l'ensemble de l'amortisseur par rapport au manchon 97. Le manchon 97 est fixé par sa face frontale supérieure à une collerette rigide 126 solidaire de l'extrémité supérieure de la tige 3. La chambre de référence 108 est en communication par le conduit 127 avec la chambre de compensation définie à l'intérieur du manchon souple 97. La chambre de compensation communique avec le gaz 121 du réservoir 98c par un passage 128 pratiqué dans la pièce 99. La mise en pression du système de compensation de la charge se fait comme dans les modes de réalisation précédents par la conduite 52 qui arrive directement dans le manchon 97.

Le fonctionnement de l'amortisseur illustré sur la figure 7 est analogue à celui des modes de réalisation précédents. Lors d'une compression brusque de l'amortisseur, le bloc élastique 101 provoque une diminution du volume utile de l'espace 98a et donc une action sur la valve de commande 104. Par ailleurs un mouvement de compression rapide de la tige entraîne, au-delà d'une certaine vitesse, l'ouverture de la valve de commande 104 diminuant ainsi la force d'amortissement.

Le fonctionnement de l'amortisseur reste identique quelle que soit la charge appliquée à la suspension grâce à la pression du gaz dans le manchon souple 97 jouant le rôle de chambre de compensation.

## Revendications

1.  Amortisseur pour suspension de véhicule automobile du type comportant un cylindre (2) contenant un liquide hydraulique, un piston (1) actionné par une tige (3) définissant dans le cylindre une première chambre (2a) et une deuxième chambre (2b), ladite deuxième chambre contenant la tige, un réservoir de liquide hydraulique (11) contenant un gaz (16) dans sa partie supérieure, ledit réservoir pouvant communiquer avec la première chambre (2a) par l'intermédiaire d'une restriction (23) lors d'un mouvement de compression rapide, une valve de commande (30) capable d'ouvrir un passage de liquide entre la première et la deuxième chambre, ladite valve de commande (30) étant soumise d'une part à la pression du liquide hydraulique se trouvant dans la première chambre (2a) tendant à ouvrir la valve et d'autre part à l'action, tendant à fermer la valve, d'un ressort de rappel (35) et de la pression d'un fluide contenu dans une chambre de référence (28) dont une paroi est mobile avec la valve de commande, un conduit (44) faisant communiquer la chambre de référence (28) avec la partie supérieure du réservoir (11), caractérisé par le fait qu'il comprend une enveloppe externe de compensation (46) solidaire de la tige et enserrant l'amortisseur de façon étanche de façon à définir une chambre de compensation (48), la chambre de compensation étant en communication avec la chambre de référence (28), la partie haute du réservoir (11) et avec une source de pression variable extérieure par un conduit (52).

2.  Amortisseur selon la revendication 1, caractérisé par le fait que le fluide se trouvant dans la chambre de référence (28) est un gaz, le réservoir de liquide hydraulique contenant également un gaz, éventuellement séparé du liquide par une membrane souple ou un piston mobile, l'enveloppe externe de compensation (46), le réservoir (11) et la chambre de référence (28) étant mis en communication.

3.  Amortisseur selon la revendication 1, caractérisé par le fait que l'enveloppe externe (46) contient, dans une première partie (68) un gaz dont la pression est variable et, dans une deuxième partie (70), du liquide hydraulique éventuellement séparé du gaz par une membrane souple (69) ou un piston mobile, la deuxième partie (70) étant en communication avec le réservoir de liquide hydraulique tandis que la chambre de référence (28) est en communication avec la première partie ou avec la deuxième partie précitées.

4.  Amortisseur selon la revendication 1, caractérisé par le fait que le fluide se trouvant dans la chambre de référence (28) est un liquide hydraulique, la chambre de référence communiquant avec le réservoir.

5.  Amortisseur selon l'une quelconque des revendications précédentes, caractérisé par le fait qu'il comprend un bloc élastique (10) par l'intermédiaire duquel se fait la fixation du cylindre, le bloc élastique étant fixé à l'intérieur de l'amortisseur, de façon à entraîner une diminution du volume utile de l'amortisseur, provoquant l'ouverture de la valve de commande (30) lors d'un mouvement de compression brusque.

6.  Amortisseur selon la revendication 5, caractérisé par le fait que la section du bloc élastique sur laquelle s'exerce la pression du liquide hydraulique est choisie égale, inférieure ou supérieure à la section utile de l'enveloppe externe de compensation (46) de façon à adapter à la valeur désirée, l'effort exercé sur le bloc élastique par la pression du gaz se trouvant dans l'enveloppe externe de compensation communiquant avec le réservoir.

7.  Amortisseur selon la revendication 6, caractérisé par le fait que le bloc élastique (67) est monté de façon excentrée par rapport à l'axe de la section utile de l'enveloppe externe de compensation de façon à créer un couple.

8.  Amortisseur selon l'une quelconque des revendications précédentes, caractérisé par le fait qu'au moins une bague d'étanchéité est montée entre l'enveloppe externe de compensations et l'amortisseur, ladite bague autorisant un déplacement relatif en translation de l'amortisseur par rapport à l'enveloppe externe de compensation.

9.  Amortisseur selon la revendication 8, caractérisé par le fait que l'étanchéité entre l'enveloppe externe de compensation et l'amortisseur est réalisée par deux bagues d'étanchéité laissant entre elles un intervalle libre.

10. Amortisseur selon la revendication 9, caractérisé par le fait que l'intervalle libre est rempli de liquide hydraulique et mis en communication avec l'enveloppe externe de compensation.

11. Amortisseur selon l'une quelconque des revendications précédentes caractérisé par le fait que l'enveloppe externe de compensation est constituée par un manchon souple non extensible (97) dont une extrémité ouverte est fixée de manière étanche sur l'amortisseur et qui peut rouler sur celui-ci lors du fonctionnement.

12. Amortisseur selon l'une quelconque des revendications précédentes, caractérisé par le fait que la valve de commande (30) est montée dans le piston, l'enveloppe externe de compensation (46) enserrant le cylindre (2).

13. Amortisseur selon la revendication 12, caractérisé par le fait que la tige (3) est creuse et permet la communication entre la chambre de référence (28) l'enveloppe externe de compensation (46) et le réservoir (11).

14. Amortisseur selon les revendications 12 ou 13, caractérisé par le fait que le réservoir (11) est situé à l'extrémité haute de l'amortisseur et fixé d'une part rigidement à la caisse du véhicule et d'autre part au cylindre (2) de l'amortisseur par l'intermédiaire d'un bloc élastique (10) capable d'entraîner une diminution du volume utile du cylindre provoquant l'ouverture de la valve de commande (30) lors d'un mouvement de compression brusque et que la tige (3), située à l'extrémité basse de l'amortisseur, est fixée rigidement à l'enveloppe externe de compensation et aux roues du véhicule.

15. Amortisseur selon l'une quelconque des revendications 1 à 11, caractérisé par le fait que le cylindre (2) est monté à l'intérieur d'un tube cylindre (71, 98), l'enveloppe externe de compensation enserrant le cylindre, une chambre annulaire (71b, 98b) étant définie entre le tube cylindrique et le cylindre (2) afin d'assurer la communication entre la première chambre et la deuxième chambre du cylindre, la valve de commande (88, 104) étant montée dans un espace intermédiaire (90, 109), une pièce de fermeture fixe (18, 112) munie d'un passage (23, 119) faisant communiquer ladite chambre annulaire (71b, 98b) avec le réservoir (11, 98c) par l'intermédiaire d'une restriction; ledit espace intermédiaire communiquant en outre avec la deuxième chambre par l'intermédiaire de la chambre annulaire.

16. Amortisseur selon la revendication 15, caractérisé par le fait que le réservoir (11) est situé à l'extrémité haute de l'amortisseur et fixé d'une part rigidement à la caisse du véhicule et d'autre part au tube cylindrique (71) par l'intermédiaire d'un bloc élastique (10) capable d'entraîner une diminution du volume utile de l'amortisseur provoquant l'ouverture de la valve de commande (88) lors d'un mouvement de compression brusque et que la tige (3), située à l'extrémité basse de l'amortisseur, est fixée rigidement à l'enveloppe externe de compensation (46) et aux roues du véhicule.

17. Amortisseur selon la revendication 15, caractérisé par le fait que le réservoir (98c) est situé à l'extrémité haute de l'amortisseur, traversé par la tige fixée rigidement à la caisse de véhicule, la partie basse de l'amortisseur étant fixée aux roues du véhicule par l'intermédiaire d'un bloc élastique (101) capable d'entraîner une diminution du volume utile de l'amortisseur provoquant l'ouverture de la valve de commande (104) lors d'un mouvement de compression brusque.

18. Amortisseur selon l'une quelconque des revendications précédentes, caractérisé par le fait qu'une restriction supplémentaire (41, 93) est placée dans l'écoulement du liquide hydraulique issu de la première chambre lors d'un mouvement de compression rapide de la tige entraînant l'ouverture de la valve de commande (30, 88).

19. Application de l'amortisseur selon l'une quelconque des revendications précédentes à une suspension de véhicule automobile du type Mac Pherson, le ressort principal de la suspension entourant l'amortisseur et s'appuyant sur une collerette (60) solidaire de l'enveloppe externe de compensation (46), la pression de l'enveloppe externe de compensation étant fournie par un dispositif de mise sous pression extérieure commandé par un capteur de position de la hauteur de la caisse de véhicule par rapport au sol.

20. Application de l'amortisseur selon l'une quelconque des revendications 1 à 18 à une suspension de véhicule automobile dénuée de ressort, l'amortisseur assurant à lui seul l'intégralité de la suspension, la pression dans l'enveloppe externe de compensation étant créée par une installation de mise sous pression externe commandée par un capteur de position de la hauteur de la caisse du véhicule par rapport au sol.

**Claims**

1. Shock absorber for an automobile vehicle suspension of the type comprising a cylinder (2) containing a hydraulic fluid, a piston (1) actuated by a rod (3) defining a first chamber (2a) and a second chamber (2b) in the cylinder, the second chamber containing the rod, a hydraulic fluid tank (11) containing a gas (16) in its upper portion, the tank being able to communicate with the first chamber (2a) via a throttle (23) during a rapid compression movement, a control valve (30) able to open a passage for fluid between the first and second chamber, this control valve (30) being subject, on the one hand, to the pressure of the hydraulic fluid located in the first chamber (2a) tending to open the valve and, on the other hand, to the action, tending to close the valve, of a recall spring (35) and the pressure of a fluid contained in a reference chamber (28) one of whose walls is movable with the control valve, a duct (44) bringing the reference chamber (28) into communication with the upper portion of the tank (11), characterized in that it comprises an outer compensation casing (46) rigid with the rod and enclosing the shock absorber in a leak-tight manner so as to define a compensation chamber (48), the compensation chamber communicating with the reference chamber (28), the top portion of the tank (11) and with an external variable pressure source via a duct (52).

2. Shock absorber as claimed in claim 1, characterized in that the fluid located in the reference chamber (28) is a gas, the hydraulic fluid tank also containing a gas, possibly separated from the fluid by a flexible membrane or a mobile piston, the external compensation casing (46); the tank (11) and the reference chamber (28) being in communication.

3. Shock absorber as claimed in claim 1, characterized in that a first portion (68) of the outer casing (46) contains a gas whose pressure is variable and a second portion (70) contains hydraulic fluid possibly separated from the gas by a flexible membrane (69) or a mobile piston, the second portion (70) being in communication with the hydraulic fluid tank while the reference chamber (28) is in communication with the first portion or with the second portion as mentioned above.

4. Shock absorber as claimed in claim 1, characterized in that the fluid located in the reference chamber (28) is a hydraulic fluid, the reference chamber communicating with the tank.

5. Shock absorber as claimed in any one of the preceding claims, characterized in that it comprises an elastic block (10) via which the cylinder is secured, the elastic block being secured to the interior of the shock absorber so as to cause a decrease of the working volume of the shock absorber causing the opening of the control valve (30) during a rapid compression movement.

6. Shock absorber as claimed in claim 5, characterized in that the section of the elastic block on which the hydraulic fluid pressure is exerted is selected to be equal to, lower than or greater than the working section of the external compensation casing (46) so as to adapt to the desired value the force exerted on the elastic block by the pressure of the gas located in the external compensation casing communicating with the tank.

7. Shock absorber as claimed in claim 6, characterized in that the elastic block (67) is mounted off centre with respect to the axis of the working section of the external compensation casing so as to create a couple.

8. Shock absorber as claimed in any one of the preceding claims, characterized in that at least one sealing ring is mounted between the external compensation casing and the shock absorber, this ring enabling a relative displacement in translation of the shock absorber with respect to the external compensation casing.

9. Shock absorber as claimed in claim 8, characterized in that the seal between the external compensation casing and the shock absorber is formed by two sealing rings leaving a free space between one another.

10. Shock absorber as claimed in claim 9, characterized in that the free space is filled with hydraulic fluid and brought into communication with the external compensation casing.

11. Shock absorber as claimed in any one of the preceding claims, characterized in that the external compensation casing is formed by a non-extensible flexible sleeve (97), an open end of which is secured in a leak-tight manner to the shock absorber and which may roll thereon during operation.

12. Shock absorber as claimed in any one of the preceding claims, characterized in that the control valve (30) is mounted in the piston, the external compensation casing (46) enclosing the cylinder (2).

13. Shock absorber as claimed in claim 12, characterized in that the rod (3) is hollow and allows communication between the reference chamber (28), the external compensation casing (46) and the tank (11).

14. Shock absorber as claimed in claims 12 or 13, characterized in that the tank (11) is located at the top end of the shock absorber and secured, on the one hand, rigidly to the vehicle body and, on the other hand, to the cylinder (2) of the shock absorber via an elastic block (10) able to cause a decrease of the working volume of the cylinder causing the opening of the control valve (30) during a rapid compression movement and in that the rod (3) located at the bottom end of the shock absorber is rigidly secured to the external compensation casing and to the vehicle wheels.

15. Shock absorber as claimed in any one of claims 1 to 11, characterized in that the cylinder (2) is mounted within a cylindrical tube (71, 98), the external compensation casing enclosing the cylinder, an annular chamber (71b, 98b) being defined between the cylindrical tube and the cylinder (2) so as to ensure communication between the first chamber and the second chamber of the cylinder, the control valve (88, 104) being mounted in an intermediate space (90, 109), a fixed closure member (18, 112) provided with a passage (23, 119) causing the annular chamber (71b, 98b) to communicate with the tank (11, 98c) via a throttle, this intermediate space also communicating with the second chamber via the annular chamber.

16. Shock absorber as claimed in claim 15, characterized in that the tank (11) is disposed at the top end of the shock absorber and fixed, on the one hand, rigidly to the vehicle body and, on the other hand, to the cylindrical tube (71) via an elastic block (10) able to cause a decrease of the working volume of the shock absorber causing the opening of the control valve (88) during a rapid compression movement and in that the rod (3) disposed at the bottom end of the shock absorber is rigidly secured to the external compensation casing (46) and to the vehicle wheels.

17. Shock absorber as claimed in claim 15, characterized in that the tank (98c) is located at the top end of the shock absorber, traversed by the rod secured rigidly to the vehicle body, the bottom portion of the shock absorber being fixed to the vehicle wheels via an elastic block (101) able to cause a decrease in the working volume of the shock absorber causing the opening of the control valve (104) during a rapid compression movement.

18. Shock absorber as claimed in any one of the preceding claims, characterized in that a supplementary throttle (41, 93) is placed in the flow of hydraulic fluid from the first chamber during a rapid compression movement of the rod causing the opening of the control valve (30, 88).

19. Application of the shock absorber as claimed in any one of the preceding claims to an automobile vehicle suspension of the Mac-Pherson type, the main spring of the suspension surrounding the shock absorber and bearing on a collar (60) rigid with the external compensation casing (46), the pressure of the external compensation casing being supplied by an external pressurizing device controlled by a position sensor for the height of the vehicle body with respect to the ground.

20. Application of the shock absorber as claimed in any one of claims 1 to 18 to an automobile vehicle suspension with no spring, the shock absorber itself providing for the whole of the suspension, the pressure in the external compensation casing being created by an external pressurizing plant controlled by a position sensor for the height of the vehicle body with respect to the ground.

**Patentansprüche**

1. Stoßdämpfer für die Kraftfahrzeugfederung, der aufweist: Einen eine Hydraulikflüssigkeit enthaltenden Zylinder (2), einen von einer Kolbenstange (3) betätigten Kolben (1), der in dem Zylinder eine erste Kammer (2a) und eine zweite Kammer (2b) begrenzt, wobei die zweite Kammer die Kolbenstange enthält, einen Vorratsbehälter für Hydraulikflüssigkeit (11), der in seinem oberen Teil ein Gas (16) enthält, wobei dieser Vorratsbehälter mit der ersten Kammer (2a) bei einer schnellen Kompressionsbewegung über einen Durchströmwiderstand (23) in Verbindung treten kann, ein Steuerventil (30), das einen Flüssigkeitsdurchlaß zwischen der ersten und der zweiten Kammer öffnen kann, wobei das Steuerventil (30) einerseits mit dem Druck der sich in der ersten Kammer (2a) befindenden Hydraulikflüssigkeit beaufschlagt ist, der bestrebt ist, das Ventil zu öffnen, und andererseits im Ventilschließungssinne unter der Einwirkung einer Rückstellfeder (35) und dem Druck eines Fluids steht, das in einer Bezugskammer (28) enthalten ist, die eine mit dem Steuerventil bewegliche Wand aufweist, wobei eine Leitung (44) vorgesehen ist, die die Bezugskammer (28) mit dem oberen Teil des Vorratsbehälters (11) in Verbindung setzt, dadurch gekennzeichnet, daß er einen äußeren Kompensationsmantel (46) aufweist, der mit der Kolbenstange starr verbunden ist und den Stoßdämpfer abgedichtet unter Ausbildung einer Kompensationskammer (48) umschließt, wobei die Kompensationskammer mit der Bezugskammer (28), dem oberen Teil des Vorratsbehälters (11) und über eine Leitung (52) mit einer äußeren veränderlichen Druckquelle in Verbindung steht.

2. Stoßdämpfer nach Anspruch 1, dadurch gekennzeichnet, daß das in der Bezugskammer (28) enthaltene Fluid ein Gas ist, wobei der Vorratsbehälter der Hydraulikflüssigkeit ebenfalls ein Gas enthält, das gegebenenfalls von der Flüssigkeit durch eine biegsame Membran oder einem beweglichen Kolben abgetrennt ist und der äußere Kompensationsmantel (46), der Vorratsbehälter (11) und die Bezugskammer (28) miteinander in Verbindung stehen.

3. Stoßdämpfer nach Anspruch 1, dadurch gekennzeichnet, daß der äußere Mantel (46) in einem ersten Abschnitt (68) ein Gas veränderlichen Druckes und in einem zweiten Abschnitt (70) Hydraulikflüssigkeit enthält, die von dem Gas gegebenenfalls durch eine biegsame Membran (69) oder einem beweglichen Kolben abgetrennt ist, wobei der zweite Abschnitt (70) mit dem Vorratsbehälter der Hydraulikflüssigkeit in Verbindung steht, während die Bezugskammer (28) mit dem ersten vorerwähnten Abschnitt oder dem zweiten vorerwähnten Abschnitt in Verbindung steht.

4. Stoßdämpfer nach Anspruch 1, dadurch gekennzeichnet, daß das in der Bezugskammer (28) befindliche Fluid eine Hydraulikflüssigkeit ist, wobei die Bezugskammer mit dem Vorratsbehälter in Verbindung steht.

5. Stoßdämpfer nach einem der vorhergehenden Ansprüche, dadurch gekennzeichnet, daß er einen elastischen Block (10) enthält, über den die Befestigung des Zylinders erfolgt, wobei der elastische Block im Inneren des Stoßdämpfers befestigt ist, derart, daß er bei einer plötzlichen Kompressionsbewegung eine ein Öffnen des Steuerventils (30) auslösende Verringerung des Nutzvolumens des Stoßdämpfers bewirkt.

6. Stoßdämpfer nach Anspruch 5, dadurch gekennzeichnet, daß der Querschnitt des elastischen Blockes, auf den der Druck der Hydraulikflüssigkeit einwirkt, gleich, kleiner oder größer als der wirksame Querschnitt des äußeren Kompensationsmantels (46) gewählt ist, derart, daß die auf den elastischen Block von dem Druck des sich in dem mit dem Vorratsbehälter in Verbindung stehenden äußeren Kompensationsmantel befindlichen Gases ausgeübte Kraft auf den jeweils gewünschten Wert eingestellt ist.

7. Stoßdämpfer nach Anspruch 6, dadurch gekennzeichnet, daß der elastische Block (67) exzentrisch bezüglich der Achse des wirksamen Querschnitts des äußeren Kompensationsmantels angeordnet ist, derart, daß ein Moment erzeugt wird.

8. Stoßdämpfer nach einem der vorhergehenden Ansprüche, dadurch gekennzeichnet, daß wenigstens ein Dichtring zwischen dem äußeren Kompensationsmantel und dem Stoßdämpfer angeordnet ist, wobei dieser Dichtring eine Verschiebebewegung des Stoßdämpfers bezüglich des äußeren Kompensationsmantels erlaubt.

9. Stoßdämpfer nach Anspruch 8, dadurch gekennzeichnet, daß die Abdichtung zwischen dem äußeren Kompensationsmantel und dem Stoßdämpfer durch zwei Dichtringe bewirkt ist, zwischen denen ein freier Raum vorhanden ist.

10. Stoßdämpfer nach Anspruch 9, dadurch gekennzeichnet, daß der freie Zwischenraum mit Hydraulikflüssigkeit gefüllt ist und mit dem äußeren Kompensationsmantel in Verbindung steht.

11. Stoßdämpfer nach einem der vorhergehenden Ansprüche, dadurch gekennzeichnet, daß der äußere Kompensationsmantel von einer nicht dehnbaren, biegsamen Hülse (97) gebildet ist, deren eines offenes Ende abgedichtet auf dem Stoßdämpfer befestigt ist und die sich im Betrieb einstülpen kann.

12. Stoßdämpfer nach einem der vorhergehenden Ansprüche, dadurch gekennzeichnet, daß das Steuerventil (30) in dem Kolben angeordnet ist, wobei der äußere Kompensationsmantel (46) den Zylinder (2) umschließt.

13. Stoßdämpfer nach Anspruch 12, dadurch gekennzeichnet, daß die Kolbenstange (3) hohl ist und eine Verbindung zwischen der Bezugskammer (28), dem äußeren Kompensationsmantel (46) und dem Vorratsbehälter (11) herstellt.

14. Stoßdämpfer nach Anspruch 12 oder 13, dadurch gekennzeichnet, daß der Vorratsbehälter (11) am oberen Ende des Stoßdämpfers angeordnet und einerseits starr an dem Fahrzeugaufbau sowie andererseits an dem Zylinder (2) des Stoßdämpfers mittels eines elastischen Blockes (10) befestigt ist, durch den das Nutzvolumen des Zylinders unter Öffnung des Steuerventiles (30) bei einer plötzlichen Kompressionsbewegung verkleinerbar ist und daß die am unteren Ende des Stoßdämpfers befindliche Kolbenstange (3) starr mit dem äußeren Kompensationsmantel und mit den Rädern des Fahrzeugs verbunden ist.

15. Stoßdämpfer nach einem der Ansprüche 1 bis 11, dadurch gekennzeichnet, daß der Zylinder (2) im Inneren eines zylindrischen Rohres (71, 98) angeordnet ist, wobei der äußere Kompensationsmantel den Zylinder umschließt, daß zwischen dem zylindrischen Rohr und dem Zylinder (2) eine Ringkammer (71b, 98b) begrenzt ist, durch die die Verbindung zwischen der ersten Kammer und der zweiten Kammer des Zylinders hergestellt ist, daß das Steuerventil (88, 104) in einem Zwischenraum (90, 109) angeordnet ist, daß ein feststehendes Verschlußstück (18, 112) mit einem Durchlaß (23, 119) versehen ist, der die Ringkammer (71, 98b) mit dem Vorratsbehälter (11, 98c) über einen Durchströmwiderstand in Verbindung setzt und der vorgenannte Zwischenraum außerdem mit der zweiten Kammer über die Ringkammer in Verbindung steht.

16. Stoßdämpfer nach Anspruch 15, dadurch gekennzeichnet, daß der Vorratsbehälter (11) am oberen Ende des Stoßdämpfers angeordnet und einerseits starr an dem Fahrzeugaufbau sowie andererseits an dem zylindrischen Rohr (71) über einen elastischen Block (10) befestigt ist, durch den das Nutzvolumen des Stoßdämpfers unter Öffnung des Steuerventils (88) bei einer plötzlichen Kompressionsbewegung verkleinerbar ist und daß die am unteren Ende des Stoßdämpfers angeordnete Kolbenstange (3) starr mit dem äußeren Kompensationsmantel (46) und mit den Fahrzeugrädern verbunden ist.

17. Stoßdämpfer nach Anspruch 15, dadurch gekennzeichnet, daß der Vorratsbehälter (98c) am oberen Ende des Stoßdämpfers angeordnet und von der starr am Fahrzeugaufbau befestigten Kolbenstange durchquert ist und daß der untere Teil des Stoßdämpfers an den Fahrzeugrädern über einen elastischen Block (101) befestigt ist, der eine Verkleinerung des Nutzvolumens des Stoßdämpfers unter Öffnung des Steuerventils (104) bei einer plötzlichen Kompressionsbewegung hervorrufen kann.

18. Stoßdämpfer nach einem der vorhergehenden Ansprüche, dadurch gekennzeichnet, daß im Abströmweg der aus der ersten Kammer bei einer die Öffnung des Steuerventiles (30, 88) bewirkenden schnellen Kompressionsbewegung der Kolbenstange abströmenden Hydraulikflüssigkeit ein Hilfsdurchströmwiderstand (41, 93) angeordnet ist.

19. Verwendung des Stoßdämpfers nach einem der vorhergehenden Ansprüche für eine Mac Pherson-Kraftfahrzeugradaufhängung, bei der die Hauptfeder der Aufhängung den Stoßdämpfer umgibt und auf einen mit dem äußeren Kompensationsmantel (46) starr verbundenen Bund (60) abgestützt ist, wobei der Druck des äußeren Kompensationsmantels von einer äußeren Druckbeaufschlagungseinrichtung geliefert wird, die von einem Lagegeber für die Bodenfreiheit des Fahrzeugaufbaus gesteuert ist.

20. Verwendung des Stoßdämpfers nach einem der Ansprüche 1 bis 18 für eine Kraftfahrzeugradaufhängung ohne Feder, bei der der Stoßdämpfer allein die gesamte Federung erbringt, wobei der Druck in dem äußeren Kompensationsmantel durch eine äußere Druckbeaufschlagungseinrichtung erzeugt wird, die durch einen Lagegeber für die Bodenfreiheit des Fahrzeugaufbaus gesteuert ist.

**FIG.1**

EP 0 275 503 B1

FIG.2

18

FIG.3

FIG.4

FIG.5

# FIG.6

# FIG.7